# EUROPEAN PATENT SPECIFICATION

(11) **EP 3 108 456 B1**
(45) Date of publication and mention of the grant of the patent: **24.06.2020**
(21) Application number: 15702714.5
(22) Date of filing: 28.01.2015
(51) Int. Cl.: G06T 19/00, G06T 7/00, A61B 5/00

(54) **MOTION ADAPTIVE VISUALIZATION IN MEDICAL 4D IMAGING**
BEWEGUNGSANGEPASSTE VISUALISIERUNG IN MEDIZINISCHER 4D-BILDGEBUNG
VISUALISATION ADAPTÉE AU MOUVEMENT DANS L'IMAGERIE MÉDICALE 4D

(30) Priority: 19.02.2014 EP 14305228
(43) Date of publication of application: 28.12.2016
(73) Proprietor: Koninklijke Philips N.V., 5656 AG Eindhoven (NL)
(72) Inventor: SOMPHONE, Oudom, NL-5656 AE Eindhoven (NL); MORY, Benoit Jean-Dominique Bertrand Maurice, NL-5656AE Eindhoven (NL)
(74) Representative: Philips Intellectual Property & Standards
(86) International application number: PCT/EP2015/051634
(87) International publication number: WO 2015/124388

(56) References cited:
- EP-A1- 2 249 178
- HEINRICH SCHULZ ET AL: "Real-Time Interactive Viewing of 4D Kinematic MR Joint Studies", MEDICAL IMAGE COMPUTING AND COMPUTER-ASSISTED INTERVENTION - MIC CAI 2005 LECTURE NOTES IN COMPUTER SCIENCE;;LNCS, SPRINGER, BERLIN, DE, vol. 3749, January 2005 (2005-01), pages 467-473, XP019021668, ISBN: 978-3-540-29327-9
- O. SOMPHONE ET AL.: "Fast Myocardial Motion and Strain Estimation in 3D Cardiac Ultrasound with Sparse Demons", ISBI 2013 PROCEEDINGS OF THE 2013 INTERNATIONAL SYMPOSIUM ON BIOMEDICAL IMAGING, 2013, pages 1182-1185, XP008171189, cited in the application

## Description

### FIELD OF THE INVENTION

The present invention generally relates to the field of medical imaging. In particular, the present invention relates to an image reconstruction apparatus for reconstructing two-dimensional (2D) image sequences from a three-dimensional (3D) image sequence. The present invention further relates to a corresponding method for reconstructing 2D image sequences from a 3D image sequence. Still further, the present invention relates to a computer program comprising program code means for causing a computer to carry out the steps of said method. An exemplary technical application of the present invention is the field of 3D ultrasound imaging. However, it shall be noted that the present invention may also be used in medical imaging modalities other than ultrasound imaging, such as, for example, CT, MR or MRI.

### BACKGROUND OF THE INVENTION

3D medical imaging systems, such as e.g. 3D ultrasound imaging systems, are well-known. 3D medical imaging has become essential to medical diagnosis practice. By providing concise and relevant information to radiologists and physicians, 3D medical imaging increases clinical productivity. 3D medical imaging systems usually generate a 3D medical image sequence over time. Therefore, these systems are sometimes also referred to as 4D medical imaging systems, wherein the time domain is considered as fourth dimension.

Visualizing 3D imaging data needs some post-acquisition processes in order to optimally exploit the image information. Unlike 2D image sequences, a whole 3D medical image sequence cannot be visualized at once on a screen and the information that is displayed has to be selected among all the voxels contained in the 3D volume. The most common ways of displaying a 3D image or image sequence are volume rendering, maximum intensity projection and orthoviewing. Orthoviewing consists in displaying planar cross-sections which are arranged perpendicularly to each other.

When visualizing a single static 3D volume, the user can navigate through the 3D volume image and adjust the cross-section's position to focus on the one or more objects of interest. The same need remains when considering the visualization of sequences of 3D medical images. However, the temporal dimension introduces a critical issue. In general, objects of interest, such as organs, tumors, vessels, move and are deformed in all directions of the three-dimensional space and not only along one given plane. This is also referred to as out-off-plane motion.

As a result, these structures of interest can move in and out across the derived planar cross-sections (orthoviews), so that one can easily lose sight of them.

Adjusting the cross-sections while watching the image sequence being played is very inconvenient, not to say unworkable. In the case of off-line visualization (when the image sequence has been pre-recorded and is visualized after the acquisition), the viewer could manually adjust the cross-sections' positions at each frame separately. This task would, however, be tedious and even impossible during live visualization.

Therefore, there is still room for improvement in such orthoviewing systems.

Schulz, H. et al.: "Real-Time Interactive Viewing of 4D Kinematic MR Joint Studies", Medical Image Computing and Computer-Assisted Intervention - MICCAI 2005, LNCS 3749, pp. 467-473, 2005 discloses a demonstrator for viewing 4D kinematic MRI datasets. It allows to view any user defined anatomical structure from any viewing perspective in real-time. Smoothly displaying the movement in a cine-loop is realized by image post processing, fixing any user defined anatomical structure after image acquisition.

### SUMMARY OF THE INVENTION

It is an object of the present invention to provide an improved image reconstruction apparatus and corresponding method which facilitates the visualization of a given object or region of interest along a temporal sequence of 3D medical images. It is particularly an object of the present invention to overcome the problem of out-off-plane motion when deriving 2D medical image sequences from a 3D medical image sequence.

According to a first aspect of the present invention, an image reconstruction apparatus is presented which comprises:
- a receiving unit for receiving a 3D image sequence of 3D medical images over time resulting from a scan of a body part of a subject;
- a selection unit for selecting a local point of interest within at least one of the 3D medical images of the 3D image sequence;
- a slice generator for generating three 2D view planes of the at least one of the 3D medical images, wherein said three 2D view planes are arranged perpendicularly to each other and intersect in the selected point of interest; and
- a tracking unit for determining a trajectory of the point of interest within the 3D image sequence over time;
wherein the slice generator is configured to generate from the 3D image sequence 2D image sequences in the 2D view planes by adapting the intersection of the 2D view planes over time along the trajectory of the point of interest.

According to a second aspect of the present invention, a method for reconstructing medical images is presented, wherein the method comprises the steps of:
- receiving a 3D image sequence of 3D medical images over time resulting from a scan of a body part of a subject;
- selecting a local point of interest within at least one of the 3D medical images of the 3D image sequence;
- generating three 2D view planes of the at least one of the 3D medical images, wherein said three 2D view planes are arranged perpendicularly to each other and intersect in the selected point of interest;
- determining a trajectory of the point of interest within the 3D image sequence over time; and
- generating from the 3D image sequence 2D image sequences in the 2D view planes by adapting the intersection of the 2D view planes over time along the trajectory of the point of interest.

According to a third aspect, a computer program is presented which comprises program code means for causing a computer to carry out the steps of the method mentioned above when said computer program is carried out on a computer.

Preferred embodiments of the invention are defined in the dependent claims. It shall be understood that the claimed method and the claimed computer program have similar and/or identical preferred embodiments as the claimed image reconstruction apparatus and as defined in the dependent claims.

It is to be noted that the present invention applies to both off-line and live visualizations. The receiving unit may thus receive the 3D image sequence either from any type of internal or external storage unit in an off-line mode, or it may receive the 3D image sequence directly from an image acquisition unit, e.g. from an ultrasound imaging apparatus, in a live visualization mode, as this will become more apparent from the following description.

The main gist of the present invention is the fact that the movement of the anatomical structure of interest (herein also denoted as point of interest) is automatically tracked over time. Three orthoviews or orthoviewing sequences are generated which intersect in the identified point of interest. However, this point of interest is not a still standing point within the 3D image sequence. This means that the 2D view planes of the three orthoviews or orthoviewing image sequences are not placed at a constant position over time with respect to an absolute coordinate system, but adapted in accordance with the movement of the point of interest. In other words, the three generated 2D image sequences, which show perpendicularly arranged 2D view planes of the 3D image sequence, always show the same cross-section of the anatomical structure under examination, even if this anatomical structure under examination (e.g. a human organ) is moving over time, which is usually the case in practice.

Once the point of interest is identified, its movement over time is tracked, so that the tracking unit may determine a trajectory of the point of interest within the 3D image sequence over time. The point of interest is therefore not a local point which is constant with respect to an absolute coordinate system, but a point or region at, in or on the anatomical structure under examination.

The generated 2D view planes are dynamically placed in accordance with the determined trajectory of the point of interest. The position of the 2D view planes are therefore kept constant with respect to the position of the anatomical structure of interest over time. In other words, the invention proposes a way of automatically and dynamically adapting the orthoviews' positions during the visualization of a 3D image sequence, so that they follow an anatomical structure under examination over time. The usually induced out-off-plane motion occurring across the 2D orthographic slices may thus be compensated for. This is especially advantageous when the anatomical structure under examination that one needs to follow during visualization has a complex topology and a non-rigid motion.

Regarding the technical terms used herein, the following shall be noted: The terms "2D view planes", "2D orthographic slices" and "orthoviews" are herein used equivalently. The terms "image" and "frame" are herein also used equivalently.

As it has been mentioned above, the presented image reconstruction apparatus may be used for both off-line and live visualizations. If used for off-line visualizations, the user may navigate through the 3D volume (the 3D image sequence) at the initial frame of the sequence as this is usually done when exploring a static volume, in order to identify the anatomical structure the user (e.g. the physician) wants to follow. The user may then click a characteristic 3D point (the point of interest), which may be a point inside the object under examination or on its border. Subsequent to this click, the three orthogonal 2D view planes are placed so that they intersect at this point of interest.

In this embodiment the selection unit preferably comprises a user input interface for manually selecting the point of interest within the at least one of the 3D medical images of the 3D image sequence. This user input interface may, for example, comprise a mouse or a tracking ball or any other type of user interface that allows to select a 3D point within a 3D image frame.

It should be evident that a manual selection of the point of interest is much easier in an off-line visualization mode than in a live visualization mode, since the user may freeze the 3D image sequence at a certain point of time, so as to easily select a characteristic 3D point.

If used in an off-line visualization mode, it is furthermore preferred that the image reconstruction apparatus comprises a storage unit for storing the received 3D image sequence. This storage unit may comprise any type of storage means, such as a hard drive or external storage means like a cloud. In this case it is of course also possible to store a plurality of 3D image sequences within the storage unit.

In the off-line visualization, the point of interest can be manually clicked/identified on any frame (not only on the first/current frame) of the 3D image sequence, if necessary. The trajectory, i.e. the movement of the point of interest over time, may in this case not only be tracked forward up to the end of the last frame of the 3D image sequence, but also backward down to the first frame of the 3D image sequence. This is not possible in a live visualization mode.

If used in a live visualization mode, manually identifying the point of interest is more complicated. In this case, the point of interest cannot be identified on a frozen image, since it has to be clicked in the live stream of the 3D image sequence displayed on the screen. An automatic identification of the point of interest is then preferred.

One of the main differences of the present invention to the method proposed in the scientific paper of Schulz, H. et al . (mentioned above in the section "background of the invention") is that Schulz, H. et al does not define a single point of interest in which three orthogonal view planes intersect, but instead proposes to define three non-collinear points. Even more important is that Schulz, H. et al proposes to use the set of 3 non-collinear points to align the whole 3D data sets by calculating the inverse of the transformation defined by the tracking of the 3 non-collinear reference points and then generate the three orthoviews afterwards based on the aligned 3D data sets. The present invention instead proposes to generate directly 2D image sequences in the three orthogonal orthoviews by adapting the intersection of the three orthogonal orthoviews over time along the trajectory of a single point of interest. The image reconstruction apparatus according to the present invention does therefore not only enable generating three orthoviews in a faster and more user-friendly manner, but also in a manner that requires less processing capacity.

According to an embodiment, the selection unit is configured to automatically select the point of interest within the at least one of the 3D medical images of the 3D image sequence by identifying one or more landmarks within the at least one of the 3D medical images. However, it shall be noted that instead of this automatic landmark detection the user may also manually select the point of interest by means of the above-mentioned user input interface if the 3D image sequence is sufficiently static.

According to an embodiment, the presented image reconstruction apparatus further comprises an image acquisition unit for scanning the body part of the subject and acquiring the 3D image sequence. In this case, the 3D image sequence received by means of the receiving unit may be directly received from the image acquisition unit, e.g. a CT, MR, MRI or ultrasound image acquisition unit. The receiving unit may thereto be coupled with the image acquisition unit either by means of a wired connection (e.g. by means of a cable) or by means of a wireless connection (by means of any nearfield communication technique).

As it has been also mentioned in the beginning, the image reconstruction apparatus is not limited to any specific type of medical imaging modality. However, an ultrasound imaging modality is a preferred application of the presented image reconstruction apparatus. According to a preferred embodiment of the present invention, the 3D image sequence is therefore a 3D ultrasound image sequence. 3D ultrasound image sequences especially have the advantage of a sufficiently high frame rate, which facilitates the tracking of the position of the point of interest over time.

In this embodiment the image acquisition unit preferably comprises:
an ultrasound transducer for transmitting and receiving ultrasound waves to and from the body part of the subject; and
an ultrasound image reconstruction unit for reconstructing the 3D ultrasound image sequence from the ultrasound waves received from body part of the subject.

In the following, the technique how the position of the point of interest is tracked by means of the tracking unit shall be explained in more detail.

According to an embodiment, the tracking unit is configured to determine the trajectory of the point of interest by:
identifying one or more distinctive points or image features in a local surrounding of the point of interest in the at least one of the 3D medical images of the 3D image sequence;
tracking one or more reference trajectories of the one or more distinctive points or image features in the 3D image sequence over time; and
determining the trajectory of the point of interest based on the one or more reference trajectories.

Tracking the trajectory of the point of interest indirectly, i.e. by tracking one or more reference trajectories of one or more distinctive points of image features in the surrounding of the point of interest, has several advantages: First of all, tracking a plurality of reference points in the surrounding instead of only tracking the position of the point of interest may lead to a more robust tracking technique. Secondly, distinctive points or image features in the surrounding of the point of interest, such as e.g. borders or textures of an organ under examination, are easier to track than a point in the middle of the organ if this point is selected as point of interest. Thus, the signal-to-noise ratio is increased and the tracking of the position of the point of interest is more accurate.

Tracking the one or more reference trajectories of the one or more distinctive points of image features is usually done by tracking in each of the frames of the 3D image sequence the voxels/pixels having the same speckle or grey value as in the previous frame. In other words, points having the same speckle or grey value along the process of the 3D image sequence over time are tracked. Points that differ in the speckle values from their surrounding image points to a larger extent, which is usually the case at borders or textures of an imaged organ, are therefore easier to track over time than points in the middle of the organ.

According to an embodiment, the tracking unit is configured to identify the one or more distinctive points or image features by identifying image regions within the at least one of the 3D medical images having local image speckle gradients above a predefined threshold value. A high image speckle gradient in a distinctive point means that the speckle or grey value of this image point differs to a large extent from the speckle or grey value of the surrounding image points. Such an image point is, as mentioned above, easier to track over time.

According to a further embodiment, the tracking unit is configured to track the one or more reference trajectories by minimizing an energy term of a dense displacement field that includes a displacement of the one or more distinctive points or image features. An algorithm called Sparse Demons is thereto preferably used. This algorithm, which is known from O. Somphone, et al.: "Fast Myocardial Motion and Strain Estimation in 3D Cardiac Ultrasound with Sparse Demons", ISBI 2013 proceedings of the 2013 International Symposium on Biomedical Imaging, p. 1182-1185, 2013, outputs a dense displacement field in a region that contains the point of interest and the distinctive points of image features in the local surrounding of the point of interest. In the above-mentioned scientific paper, the Sparse Demons algorithm was used for strain estimation in 3D cardiac ultrasound images. The Sparse Demons algorithm may, however, by means of an appropriate adaptation also be used for the presented purpose. The algorithm will then track the distinctive points in the local surrounding of the point of interest and use the estimated displacement of these reference points (reference trajectories) in order to determine the displacement of the point of interest over time (i.e. the trajectory of the point of interest).

According to an embodiment, the tracking unit is configured to determine the trajectory of the point of interest based on the one or more reference trajectories by a local interpolation between the one or more reference trajectories. If the position of the point of interest is in one frame known with respect to the reference points or reference image features (e.g. in the first frame in which the point of interest has been manually or automatically selected as mentioned above), the position of the point of interest may be interpolated in the remaining frames of the 3D image sequence based on the determined reference trajectories.

In a further embodiment of the present invention, the image reconstruction apparatus comprises a display unit for displaying at least one of the 2D image sequences. It is especially preferred that the display unit is configured to concurrently display the 3D image sequence and three 2D image sequences belonging to the three perpendicularly arranged 2D view planes. Such an illustration allows the user to examine the 3D image sequence in a very comfortable way. In a further preferred embodiment, the user may be enabled to rotate the 2D view planes of one or more of the 2D image sequences around an axis through the point of interest. The user may thus easily adapt the orientation of the three orthoviews.

### BRIEF DESCRIPTION OF THE DRAWINGS

These and other aspects of the invention will be apparent from and elucidated with reference to the embodiments) described hereinafter. In the following drawings
Fig. 1 shows a schematic representation of an ultrasound imaging system in use to scan a part of a patient's body;
Fig. 2 shows a schematic block diagram of an embodiment of an ultrasound imaging system;
Fig. 3 shows a schematic block diagram of a first embodiment of an image reconstruction apparatus according to the present invention;
Fig. 4 shows a schematic block diagram of a second embodiment of the image reconstruction apparatus according to the present invention;
Fig. 5 shows a 2D image sequences generated by means of the image reconstruction apparatus according to the present invention
Fig. 6 shows a 2D image sequences generated by means of a prior art imaging reconstruction apparatus; and
Fig. 7 shows three 2D image sequences and a 3D image sequence as it may be reconstructed and displayed by means of the imaging reconstruction apparatus according to the present invention.

### DETAILED DESCRIPTION OF THE INVENTION

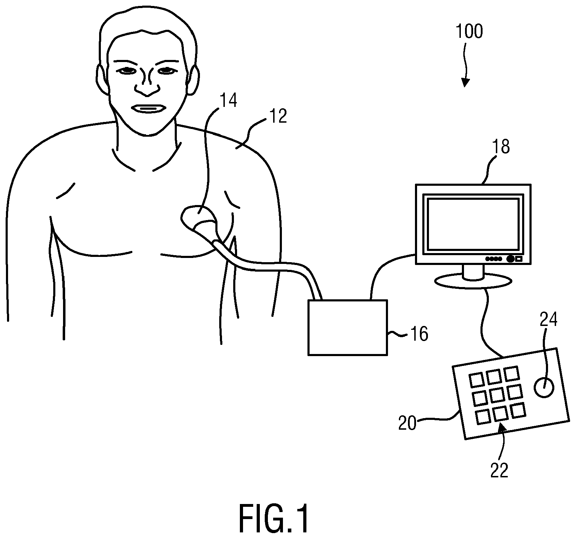

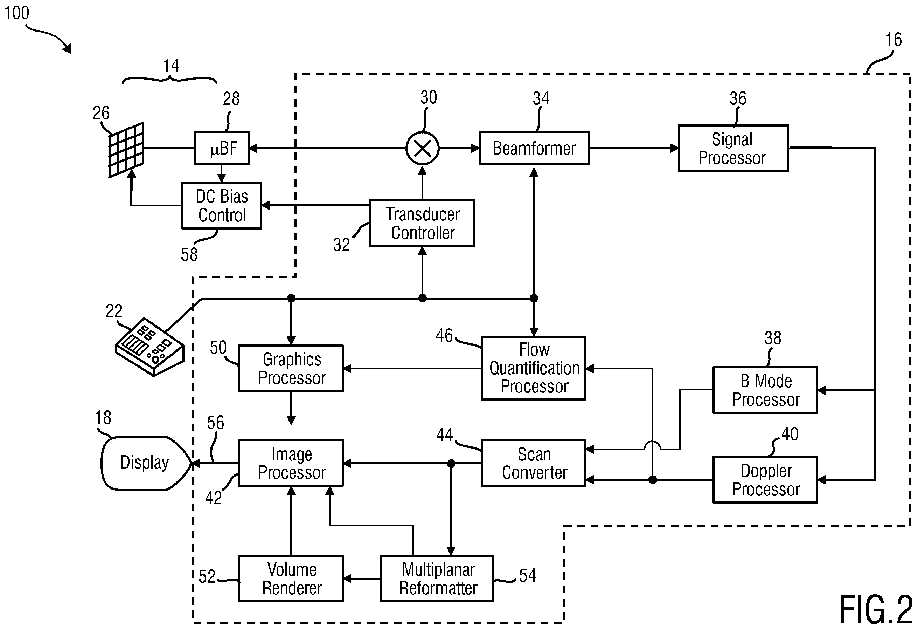

Before referring to the image reconstruction apparatus 10 according to the present invention, the basic principles of an ultrasound system 100 shall be explained with reference to Figs. 1 and 2. Even though the field of ultrasound imaging is a preferred application of the herein presented image reconstruction apparatus 10, the presented image reconstruction apparatus 10 is not limited to the field of ultrasound imaging. The herein presented image reconstruction apparatus 10 may also be used in other medical imaging modalities, such as, for example, CT, MR, MRI, etc..

Fig. 1 shows a schematic illustration of an ultrasound system 100, in particular a medical three-dimensional (3D) ultrasound imaging system. The ultrasound imaging system 100 is applied to inspect a volume of an anatomical site, in particular an anatomical site of a patient 12 over time. The ultrasound system 100 comprises an ultrasound probe 14 having at least one transducer array having a multitude of transducer elements for transmitting and/or receiving ultrasound waves. In one example, each of the transducer elements can transmit ultrasound waves in form of at least one transmit impulse of a specific pulse duration, in particular a plurality of subsequent transmit pulses. The transducer elements are preferably arranged in a two-dimensional array, in particular for providing a multi-planar or three-dimensional image.

A particular example for a three-dimensional ultrasound system which may be applied for the current invention is the CX40 Compact Xtreme ultrasound system sold by the applicant, in particular together with a X6-1 or X7-2t TEE transducer of the applicant or another transducer using the xMatrix technology of the applicant. In general, matrix transducer systems as found on Philips iE33 systems or mechanical 3D/4D transducer technology as found, for example, on the Philips iU22 and HD15 systems may be applied for the current invention.

A 3D ultrasound scan typically involves emitting ultrasound waves that illuminate a particular volume within a body, which may be designated as target volume. This can be achieved by emitting ultrasound waves at multiple different angles. A set of volume data is then obtained by receiving and processing reflected waves. The set of volume data is a representation of the target volume within the body over time. Since time is usually denoted as fourth dimension, such ultrasound system 100 delivering a 3D image sequence over time, is sometimes also referred to a 4D ultrasound imaging system.

It shall be understood that the ultrasound probe 14 may either be used in a non-invasive manner (as shown in Fig. 1) or in an invasive manner as this is usually done in TEE (not explicitly shown). The ultrasound probe 14 may be hand-held by the user of the system, for example medical staff or a physician. The ultrasound probe 14 is applied to the body of the patient 12 so that an image of an anatomical site, in particular an anatomical object of the patient 12 is provided.

Further, the ultrasound system 100 may comprise an image reconstruction unit 16 that controls the provision of a 3D image sequence via the ultrasound system 100. As will be explained in further detail below, the image reconstruction unit 16 controls not only the acquisition of data via the transducer array of the ultrasound probe 14, but also signal and image processing that form the 3D image sequence out of the echoes of the ultrasound beams received by the transducer array of the ultrasound probe 14.

The ultrasound system 100 may further comprise a display 18 for displaying the 3D image sequence to the user. Still further, an input device 20 may be provided that may comprise keys or a keyboard 22 and further inputting devices, for example a trackball 24. The input device 20 might be connected to the display 18 or directly to the image reconstruction unit 16.

Fig. 2 illustrates a schematic block diagram of the ultrasound system 100. The ultrasound probe 14 may, for example, comprise a CMUT transducer array 26. The transducer array 26 may alternatively comprise piezoelectric transducer elements formed of materials such as PZT or PVDF. The transducer array 26 is a one- or a two-dimensional array of transducer elements capable of scanning in three dimensions for 3D imaging. The transducer array 26 is coupled to a microbeamformer 28 in the probe which controls transmission and reception of signals by the CMUT array cells or piezoelectric elements. Microbeamformers are capable of at least partial beamforming of the signals received by groups or "patches" of transducer elements as described in US Pats. 5,997,479 (Savord et al.), 6,013,032 (Savord), and 6,623,432 (Powers et al.) The microbeamformer 28 may coupled by a probe cable to a transmit/receive (T/R) switch 30 which switches between transmission and reception and protects the main beamformer 34 from high energy transmit signals when a microbeamformer 28 is not used and the transducer array 26 is operated directly by the main beamformer 34. The transmission of ultrasonic beams from the transducer array 26 under control of the microbeamformer 28 is directed by a transducer controller 32 coupled to the microbeamformer 28 by the T/R switch 30 and the main system beamformer 34, which receives input from the user's operation of the user interface or control panel 22. One of the functions controlled by the transducer controller 32 is the direction in which beams are steered and focused. Beams may be steered straight ahead from (orthogonal to) the transducer array 26, or at different angles for a wider field of view. The transducer controller 32 can be coupled to control a DC bias control 58 for the CMUT array. The DC bias control 58 sets DC bias voltage(s) that are applied to the CMUT cells.

The partially beamformed signals produced by the microbeamformer 26 on receive are coupled to the main beamformer 34 where partially beamformed signals from individual patches of transducer elements are combined into a fully beamformed signal. For example, the main beamformer 34 may have 128 channels, each of which receives a partially beamformed signal from a patch of dozens or hundreds of CMUT transducer cells or piezoelectric elements. In this way the signals received by thousands of transducer elements of the transducer array 26 can contribute efficiently to a single beamformed signal.

The beamformed signals are coupled to a signal processor 36. The signal processor 36 can process the received echo signals in various ways, such as bandpass filtering, decimation, I and Q component separation, and harmonic signal separation which acts to separate linear and nonlinear signals so as to enable the identification of nonlinear (higher harmonics of the fundamental frequency) echo signals returned from tissue and/or microbubbles comprised in a contrast agent that has been pre-administered to the body of the patient 12. The signal processor 36 may also perform additional signal enhancement such as speckle reduction, signal compounding, and noise elimination. The bandpass filter in the signal processor 36 can be a tracking filter, with its passband sliding from a higher frequency band to a lower frequency band as echo signals are received from increasing depths, thereby rejecting the noise at higher frequencies from greater depths where these frequencies are devoid of anatomical information.

The processed signals may be transferred to a B mode processor 38 and a Doppler processor 40. The B mode processor 38 employs detection of an amplitude of the received ultrasound signal for the imaging of structures in the body such as the tissue of organs and vessels in the body. B mode images of structure of the body may be formed in either the harmonic image mode or the fundamental image mode or a combination of both as described in US Pat. 6,283,919 (Roundhill et al.) and US Pat. 6,458,083 (Jago et al.) The Doppler processor 40 may process temporally distinct signals from tissue movement and blood flow for the detection of the motion of substances such as the flow of blood cells in the image field. The Doppler processor 40 typically includes a wall filter with parameters which may be set to pass and/or reject echoes returned from selected types of materials in the body. For instance, the wall filter can be set to have a passband characteristic which passes signal of relatively low amplitude from higher velocity materials while rejecting relatively strong signals from lower or zero velocity material. This passband characteristic will pass signals from flowing blood while rejecting signals from nearby stationary or slowing moving objects such as the wall of the heart. An inverse characteristic would pass signals from moving tissue of the heart while rejecting blood flow signals for what is referred to as tissue Doppler imaging, detecting and depicting the motion of tissue. The Doppler processor 40 may receive and process a sequence of temporally discrete echo signals from different points in an image field, the sequence of echoes from a particular point referred to as an ensemble. An ensemble of echoes received in rapid succession over a relatively short interval can be used to estimate the Doppler shift frequency of flowing blood, with the correspondence of the Doppler frequency to velocity indicating the blood flow velocity. An ensemble of echoes received over a longer period of time is used to estimate the velocity of slower flowing blood or slowly moving tissue.

The structural and motion signals produced by the B mode and Doppler processors 38, 40 may then be transferred to a scan converter 44 and a multiplanar reformatter 54. The scan converter 44 arranges the echo signals in the spatial relationship from which they were received in a desired image format. For instance, the scan converter 44 may arrange the echo signal into a two dimensional (2D) sector-shaped format, or a pyramidal three dimensional (3D) image. The scan converter 44 can overlay a B mode structural image with colors corresponding to motion at points in the image field with their Doppler-estimated velocities to produce a color Doppler image which depicts the motion of tissue and blood flow in the image field. The multiplanar reformatter 54 will convert echoes which are received from points in a common plane in a volumetric region of the body into an ultrasonic image of that plane, as described in US Pat. 6,443,896 (Detmer). A volume renderer 52 converts the echo signals of a 3D data set into a projected 3D image sequence 56 over time as viewed from a given reference point as described in US Pat. 6,530,885 (Entrekin et al.). The 3D image sequence 56 is transferred from the scan converter 44, multiplanar reformatter 54, and volume renderer 52 to an image processor 42 for further enhancement, buffering and temporary storage for display on the display 18. In addition to being used for imaging, the blood flow values produced by the Doppler processor 40 and tissue structure information produced by the B mode processor 38 may be transferred to a quantification processor 46. This quantification processor 46 may produce measures of different flow conditions such as the volume rate of blood flow as well as structural measurements such as the sizes of organs and gestational age. The quantification processor 46 may receive input from the user control panel 22, such as the point in the anatomy of an image where a measurement is to be made. Output data from the quantification processor 46 may be transferred to a graphics processor 50 for the reproduction of measurement graphics and values with the image on the display 18. The graphics processor 50 can also generate graphic overlays for display with the ultrasound images. These graphic overlays can contain standard identifying information such as patient name, date and time of the image, imaging parameters, and the like. For these purposes the graphics processor 50 may receive input from the user interface 22, such as patient name. The user interface 22 may be coupled to the transmit controller 32 to control the generation of ultrasound signals from the transducer array 26 and hence the images produced by the transducer array and the ultrasound system. The user interface 22 may also be coupled to the multiplanar reformatter 54 for selection and control of the planes of multiple multiplanar reformatted (MPR) images which may be used to perform quantified measures in the image field of the MPR images.

Again, it shall be noted that the aforementioned ultrasound system 100 has only been explained as one possible example for an application of the presented image reconstruction apparatus. It shall be noted that the aforementioned ultrasound system 100 does not have to comprise all of the components explained before. On the other hand, the ultrasound system 100 may also comprise further components, if necessary. Still further, it shall be noted that a plurality of the aforementioned components do not necessarily have to be realized as hardware, but may also be realized as software components. A plurality of the aforementioned components may also be comprised in common entities or even in one single entity and do not all have to be realized as separate entities, as this is schematically shown in Fig. 2.

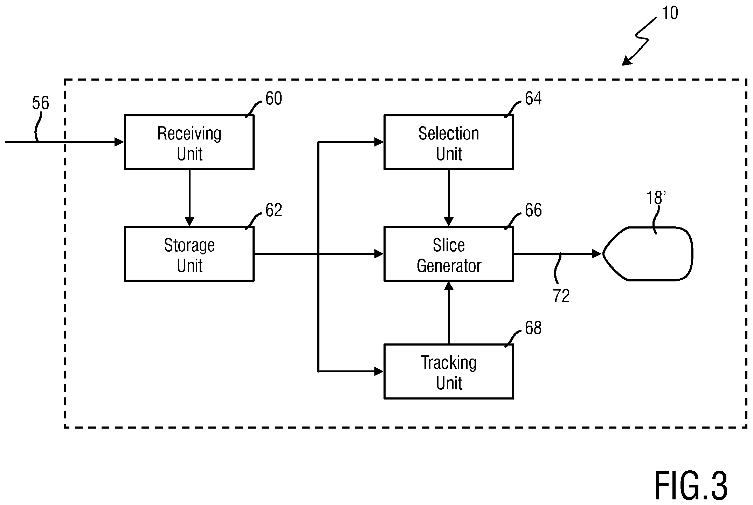

Fig. 3 shows a first embodiment of the image reconstruction apparatus 10 according to the present invention. This first embodiment of the image reconstruction apparatus 10 is designed for an off-line visualization of a 3D image sequence 56. The 3D image sequence 56 received by the image reconstruction apparatus 10 may, for example, be a 3D ultrasound image sequence 56 as exemplarily acquired and reconstructed by means of an ultrasound system 100 explained above with reference to Fig. 2. It shall be noted that the 3D image sequence 56 does not have to be received directly from an image acquisition system as the ultrasound system 100, but may also be received from another storage means, e.g. from a USB-stick or an external server to which the 3D image sequence 56 has been temporarily saved.

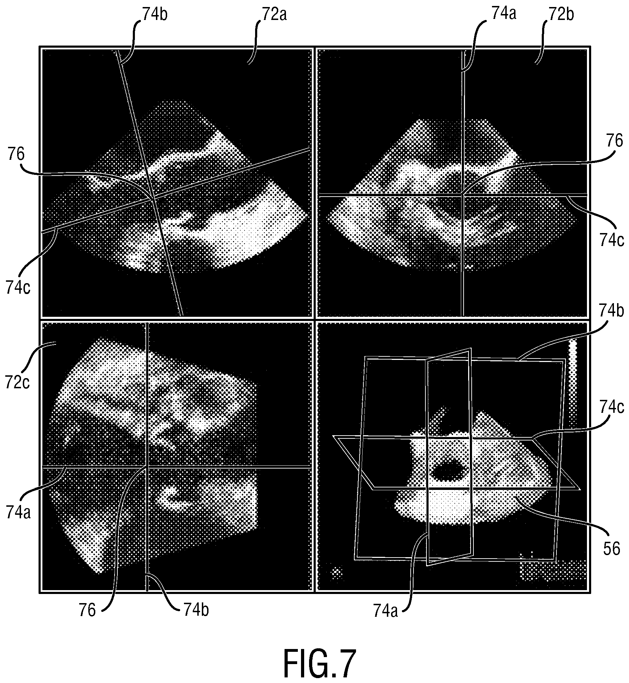

The image reconstruction apparatus 10 according to the first embodiment comprises a receiving unit 60, a storage unit 62, a selection unit 64, a slice generator 66, a tracking unit 68 and a display 18'. The receiving unit 60 receives the 3D image sequence 56 and may transfer it to the storage unit 62, where the 3D image sequence may be temporarily saved. The storage unit 62 may, for example, be realized as a hard drive. As soon as the image reconstruction is initialized, for example by the user, at least three 2D image sequences are derived from the 3D image sequence and presented on the display 18'. The derived 2D image sequences show temporal image sequences in three different orthoviews, i.e. in three 2D view planes of the 3D image sequence which are arranged perpendicularly to one another. Fig. 7 shows an exemplary type of illustration on the display unit 18', wherein the three 2D image sequences 72a-c (three orthoviewing image sequences) are presented concurrently with the 3D image sequence 56 (bottom right part).

The derivation of these 2D image sequences 72 from the 3D image sequence 56 by means of the selection unit 64, the slice generator 66 and the tracking unit 68 works as follows: In a first step, a local point of interest is selected within at least one of the frames of the 3D image sequence 56 by means of the selection unit 64. This selection step may either be performed manually or automatically. A manual selection means that the user manually clicks on one point of interest within the 3D volume of a frame of the 3D image sequence 56. In this case, the selection unit 64 may be realized as a mouse or tracking ball. If the image reconstruction apparatus 10 is combined with the imaging system 100, the point of interest may, for example, be manually selected by means of the user input interface 22.

Alternatively, the local point of interest may be selected automatically by means of the selection unit 64. The selection unit 64 is in this case preferably software-implemented. An automatic selection of the point of interest within the at least one frame of the 3D image sequence 56 may, for example, be realized by identifying one or more landmarks within the respective frame of the 3D image sequence 56. Such a landmark detection is well-known. For example, it is possible to detect a very dark or very bright point within the 3D image sequence 56. Alternatively, the landmarks may be identified based on specific shapes the landmark detection algorithm implemented in the selection unit 64 is searching for in the 3D image sequence 56. The landmark detection algorithm may thus exemplarily search for characteristic shapes on the border of an imaged organ within the 3D image sequence 56.

As soon as the point of interest is identified by means of the selection unit 64, the slice generator will generate three 2D view planes of the 3D volume, wherein said three 2D view planes are arranged perpendicularly to each other and intersect in the selected point of interest. In each of the 2D view planes a 2D image sequence 72 will be generated that is derived from the 3D image sequence 56.

Fig. 7 shows a first image sequence 72a illustrated in the upper left corner, a second image sequence 72b illustrated in the upper right corner and a third image sequence 72c illustrated in the lower left corner. The first 2D image sequence 72a shows the 3D volume in the first 2D view plane 74a, the second 2D image sequence 72b shows the 3D volume in the second 2D view plane 74b and the third 2D image sequence 72c shows the 3D volume in the third 2D view plane 74c.

As it may be seen in Fig. 7, all three 2D view planes 74a-c are arranged perpendicularly to each other and intersect in the selected point of interest 76. The absolute position of the point of interest 76 is, however, not constant over time. The absolute position shall herein denote the position of the point of interest 76 with respect to an absolute coordinate system of the 3D image sequence 56. This movement of the point of interest 76 results from the movement of the anatomical structure under examination (e.g. an organ, a vessel or tissue) over time. The 2D image sequences 72 would thus be disturbed by the so-called out-off-plane motion if the movement of the point of interest 76 was not compensated for.

According to the present invention this movement compensation is accomplished by means of the tracking unit 68. The tracking unit 68 determines a trajectory of the point of interest 76 within the 3D image sequence 56 over time. The slice generator 66 may then adapt the position of the 2D view planes 74a-c by adapting the intersection of the 2D view planes 74a-c over time along the trajectory of the point of interest 76. In other words, the point of interest 76 will move in accordance with the movement of the anatomical structure of interest and the 2D view planes 74a-c will also move over time in accordance with the movement of the point of interest 76. The position of the orthoviews 74a-c is thus automatically and dynamically adapted during the visualization of the 3D image sequence, so that the orthoviews 74a-c follow the movement of the anatomical structure under examination. The derived 2D image sequences 72a-c therefore always show image sequences of the same cross-section of the 3D image sequence 56, wherein the out-off-plane motion is automatically compensated for. This significantly facilitates the inspection and evaluation of such a 3D image sequence for a physician. The physician does no longer have to manually adjust the cross-sections while watching the sequence being played.

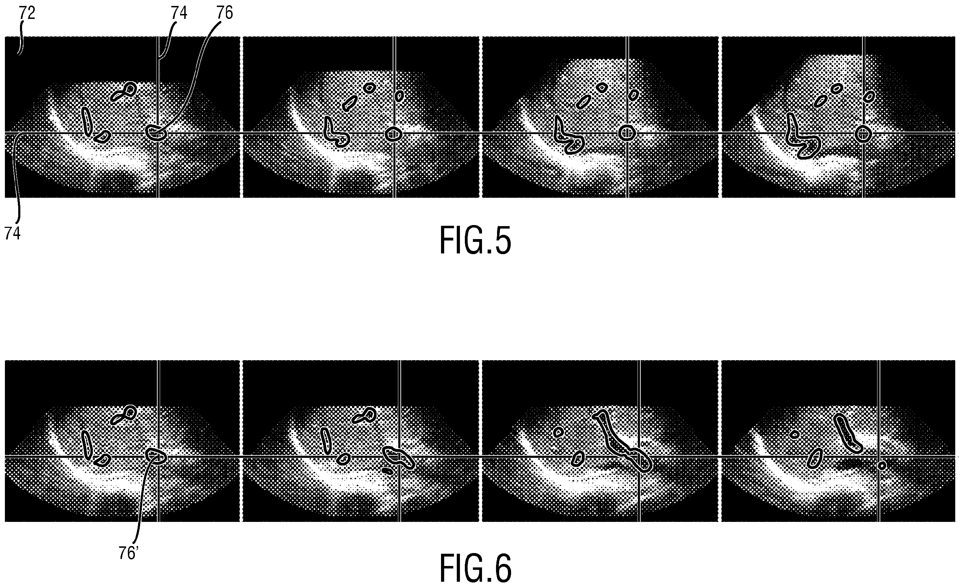

In Figs. 5 and 6 a 2D image sequence 72 generated by means of the image reconstruction apparatus 10 (shown in Fig. 5) is compared to a corresponding 2D image sequence (shown in Fig. 6) in which the position of the point of interest 76 is not adapted, but kept constant with respect to an absolute coordinate system. The advantages of the present invention should become apparent from this comparison. From Fig. 6 it can be observed that the out-off-plane motion disturbs the 2D image sequence, which makes the examination of the physician quite hard. The object initially pointed by the point of interest 76' undergoes a topology change (see third frame from left in Fig. 6) and disappearance (see fourth frame from left in Fig. 6). This is not the case in the 2D image sequence 72 shown in Fig. 5 where the position of the point of interest 76 and accordingly also the position of the view planes 74 is automatically adapted in the above-explained way.

The tracking of the position of the point of interest 76 by means of the tracking unit 68 is preferably realized in the following way: The tracking unit 68 preferably tracks the position of the point of interest 76 so to say in an indirect way by tracking the position of one or more distinctive reference points or image features in the local surrounding of the point of interest 76. The tracking unit 68 therefore identifies the one or more distinctive reference points of image features by identifying image regions having a high local image speckle gradient, i.e. regions within the frames of the 3D image sequence that significantly differ in their grey values from their surrounding. These distinctive reference points may, for example, be points on the borders of an organ or a vessel. Due to the high image speckle gradient in the reference points, the position of these reference points is easier to track along the image sequence 56 than tracking the position of the point of interest 76 itself directly. The tracking unit 68 may thus track one or more reference trajectories (i.e. the position of the distinctive reference points along the image sequence over time) and then determine the trajectory of the point of interest 76 based upon the one or more determined reference trajectories. The tracking unit 68 may, for example, be configured to determine the trajectory of the point of interest 76 based on the one or more reference trajectories by a local interpolation between these one or more reference trajectories.

In a preferred embodiment of the present invention, the tracking unit 68 makes use of the so-called Sparse Demons algorithm which is known from O. Somphone, et al.: "Fast Myocardial Motion and Strain Estimation in 3D Cardiac Ultrasound with Sparse Demons", ISBI 2013 proceedings of the 2013 International Symposium on Biomedical Imaging, p. 1182-1185, 2013. The output of this algorithm is a dense displacement field in a region that contains the point of interest 76 and the one or more distinctive reference points of image features.

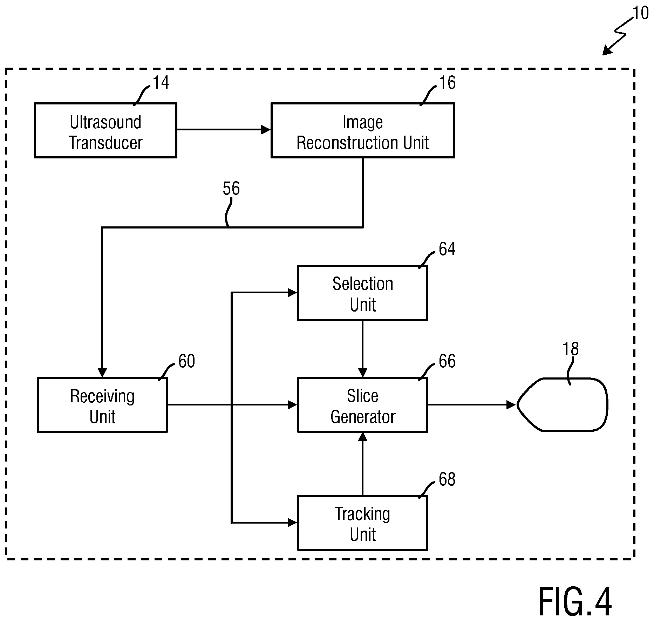

Fig. 4 shows a second embodiment of the image reconstruction apparatus 10 according to the present invention. In this second embodiment the image reconstruction apparatus 10 further comprises the ultrasound transducer 14, the image reconstruction unit 16, the display 18 of the ultrasound system 100 shown in Fig. 2. In other words, the image reconstruction apparatus 10 is implemented in the ultrasound system 100. Even though a storage unit 62 is in this case not necessarily needed, it should be clear that the image reconstruction apparatus 10 according to the second embodiment may also comprise a storage unit 62 as explained with reference to the first embodiment shown in Fig. 3. The image reconstruction apparatus 10 according to the second embodiment of the present invention is particularly designed for live visualizations. The receiving unit 60 in this case receives the 3D image sequence directly from the image reconstruction unit 16 of the ultrasound system 100. The general technique that is applied by the image reconstruction apparatus 10, especially the function of the selection unit 64, the slice generator 66 and the tracking unit 68, does not differ from the technique explained in detail above with reference to Fig. 3. The receiving unit 60, the selection unit 64, the slice generator 66 and the tracking unit 68 may in this case also be software- and/or hardware-implemented. All components 60-68 could also be components of the image processor 42.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. An image reconstruction apparatus (10) comprising:
- a receiving unit (60) for receiving a 3D image sequence (56) of 3D medical images over time resulting from a scan of a body part of a subject (12);
- a selection unit (64) for selecting a local point of interest (76) within at least one of the 3D medical images of the 3D image sequence (56);
- a slice generator (66) for generating three 2D view planes (74) of the at least one of the 3D medical images, wherein said three 2D view planes (74) are arranged perpendicularly to each other and intersect in the selected point of interest (76); and
- a tracking unit (68) for determining a trajectory of the point of interest (76) within the 3D image sequence (56) over time;
wherein the slice generator (66) is configured to generate from the 3D image sequence (56) 2D image sequences (72) in the 2D view planes (74) by automatically adapting the intersection of the 2D view planes (74) over time along the trajectory of the point of interest (76).

2. The image reconstruction apparatus of claim 1, wherein the selection unit (64) comprises a user input interface for manually selecting the point of interest (76) within the at least one of the 3D medical images of the 3D image sequence (56).

3. The image reconstruction apparatus of claim 1, wherein the selection unit (62) is configured to automatically select the point of interest (76) within the at least one of the 3D medical images of the 3D image sequence (56) by identifying one or more landmarks within the at least one of the 3D medical images.

4. The image reconstruction apparatus of claim 1, further comprising a storage unit (62) for storing the received 3D image sequence (56).

5. The image reconstruction apparatus of claim 1, further comprising an image acquisition unit for scanning the body part of the subject (12) and acquiring the 3D image sequence (56).

6. The image reconstruction apparatus of claim 1, wherein the 3D image sequence (56) is a 3D ultrasound image sequence.

7. The image reconstruction apparatus of claims 5 and 6, wherein the image acquisition unit comprises:
- an ultrasound transducer (14) for transmitting and receiving ultrasound waves to and from the body part of the subject (12); and
- an ultrasound image reconstruction unit (16) for reconstructing the 3D ultrasound image sequence (56) from the ultrasound waves received from body part of the subject (12).

8. The image reconstruction apparatus of claim 1, wherein the tracking unit (68) is configured to determine the trajectory of the point of interest (76) by:
- identifying one or more distinctive points or image features in a local surrounding of the point of interest (76) in the at least one of the 3D medical images of the 3D image sequence (56);
- tracking one or more reference trajectories of the one or more distinctive points or image features in the 3D image sequence (56) over time; and
- determining the trajectory of the point of interest (76) based on the one or more reference trajectories.

9. The image reconstruction apparatus of claim 8, wherein the tracking unit (68) is configured to identify the one or more distinctive points or image features by identifying image regions within the at least one of the 3D medical images having local image speckle gradients above a predefined threshold value.

10. The image reconstruction apparatus of claim 8, wherein the tracking unit (68) is configured to track the one or more reference trajectories by minimizing an energy term of a dense displacement field that includes a displacement of the one or more distinctive points or image features.

11. The image reconstruction apparatus of claim 8, wherein the tracking unit (68) is configured to determine the trajectory of the point of interest (76) based on the one or more reference trajectories by a local interpolation between the one or more reference trajectories.

12. The image reconstruction apparatus of claim 1, further comprising a display unit (18, 18') for displaying at least one of the 2D image sequences (72).

13. The image reconstruction apparatus of claim 12, wherein the display unit (18, 18') is configured to concurrently display the 3D image sequence (56) and three 2D image sequences (72) belonging to the three perpendicularly arranged 2D view planes (74).

14. Method for reconstructing medical images, comprising the steps of:
- receiving a 3D image sequence (56) of 3D medical images over time resulting from a scan of a body part of a subject (12);
- selecting a local point of interest (76) within at least one of the 3D medical images of the 3D image sequence (56);
- generating three 2D view planes (74) of the at least one of the 3D medical images, wherein said three 2D view planes (74) are arranged perpendicularly to each other and intersect in the selected point of interest (76);
- determining a trajectory of the point of interest (76) within the 3D image sequence (56) over time; and
generating from the 3D image sequence (56) 2D image sequences (72) in the 2D view planes (74) by automatically adapting the intersection of the 2D view planes (74) over time along the trajectory of the point of interest (76).

15. Computer program comprising program code means for causing a computer to carry out the steps of the method as claimed in claim 14 when said computer program is carried out on a computer.

## Patentansprüche

1. Bildrekonstruktionsvorrichtung (10), umfassend:
- eine Empfangseinheit (60) zum Empfangen einer 3D-Bildsequenz (56) von medizinischen 3D-Bildern über die Zeit, die aus einem Scan eines Körperteils eines Subjekts (12) resultiert;
- eine Auswahleinheit (64) zum Auswählen eines lokalen interessierenden Punktes (76) innerhalb mindestens eines der medizinischen 3D-Bilder der 3D-Bildsequenz (56);
- einen Schichtgenerator (66) zum Erzeugen von drei 2D-Ansichtsebenen (74) des mindestens einen der medizinischen 3D-Bilder, wobei die drei 2D-Ansichtsebenen (74) senkrecht zueinander angeordnet sind, und sich in dem ausgewählten interessierenden Punkt schneiden (76); und
- eine Verfolgungseinheit (68) zum Bestimmen einer Trajektorie des interessierenden Punktes (76) innerhalb der 3D-Bildsequenz (56) über die Zeit; wobei der Schichtgenerator (66) so konfiguriert ist, dass er aus der 3D-Bildsequenz (56) 2D-Bildsequenzen (72) in den 2D-Ansichtsebenen (74) erzeugt, indem der Schnittpunkt der 2D-Ansichtsebenen (74) über die Zeit entlang der Trajektorie des interessierenden Punkts (76) automatisch angepasst wird.

2. Bildrekonstruktionsvorrichtung nach Anspruch 1, wobei die Auswahleinheit (64) eine Benutzereingabeschnittstelle zum manuellen Auswählen des interessierenden Punktes (76) innerhalb des mindestens eines der medizinischen 3D-Bilder der 3D-Bildsequenz (56) umfasst.

3. Bildrekonstruktionsvorrichtung nach Anspruch 1, wobei die Auswahleinheit (62) konfiguriert ist, um automatisch den interessierenden Punkt (76) innerhalb des mindestens einen der medizinischen 3D-Bilder der 3D-Bildsequenz (56) auszuwählen, durch Identifizieren eines oder mehr Orientierungspunkte innerhalb mindestens eines der medizinischen 3D-Bilder.

4. Bildrekonstruktionsvorrichtung nach Anspruch 1, ferner umfassend eine Speichereinheit (62) zum Speichern der empfangenen 3D-Bildsequenz (56).

5. Bildrekonstruktionsvorrichtung nach Anspruch 1, ferner umfassend eine Bilderfassungseinheit zum Abtasten des Körperteils des Subjekts (12) und zum Erfassen der 3D-Bildsequenz (56).

6. Bildrekonstruktionsvorrichtung nach Anspruch 1, wobei die 3D-Bildsequenz (56) eine 3D-Ultraschallbildsequenz ist.

7. Bildrekonstruktionsvorrichtung nach den Ansprüchen 5 und 6, wobei die Bildaufnahmeeinheit umfasst:
- einen Ultraschallwandler (14) zum Senden und Empfangen von Ultraschallwellen zum und vom Körperteil des Subjekts (12); und
- eine Ultraschallbildrekonstruktionseinheit (16) zur Rekonstruktion der 3D-Ultraschallbildsequenz (56) aus den Ultraschallwellen, die von dem Körperteil des Subjekts (12) empfangen werden.

8. Bildrekonstruktionsvorrichtung nach Anspruch 1, wobei die Verfolgungseinheit (68) konfiguriert ist, um die Trajektorie des interessierenden Punktes (76) zu bestimmen durch:
- Identifizieren eines oder mehrerer Unterscheidungspunkte oder Bildmerkmale in einer lokalen Umgebung des interessierenden Punktes (76) in mindestens einem der medizinischen 3D-Bilder der 3D-Bildsequenz (56);
- Verfolgen einer oder mehrerer Referenztrajektorien des einen oder der mehreren Unterscheidungspunkte oder Bildmerkmale in der 3D-Bildsequenz (56) über die Zeit: und
- Bestimmen der Trajektorie des interessierenden Punkts (76) basierend auf der einen oder den mehreren Referenztrajektorien.

9. Bildrekonstruktionsvorrichtung nach Anspruch 8, wobei die Verfolgungseinheit (68) konfiguriert ist, um den einen oder die mehreren Unterscheidungspunkte oder Bildmerkmale zu identifizieren, indem Bildbereiche innerhalb des mindestens einen der medizinischen 3D-Bilder mit lokalen Bildfleckgradienten über einem vordefinierten Schwellenwert identifiziert werden.

10. Bildrekonstruktionsvorrichtung nach Anspruch 8, wobei die Verfolgungseinheit (68) konfiguriert ist, um die eine oder mehreren Referenztrajektorien durch Minimieren eines Energieterms eines dichten Verschiebungsfeldes zu verfolgen, das eine Verschiebung des einen oder der mehreren Unterscheidungspunkte oder Bildmerkmale enthält.

11. Bildrekonstruktionsvorrichtung nach Anspruch 8, wobei die Verfolgungseinheit (68) konfiguriert ist, um die Trajektorie des interessierenden Punktes (76) basierend auf der einen oder den mehreren Referenztrajektorien durch eine lokale Interpolation zwischen der einen oder den mehreren Referenztrajektorien zu bestimmen.

12. Bildrekonstruktionsvorrichtung nach Anspruch 1, ferner umfassend eine Anzeigeeinheit (18, 18') zum Anzeigen mindestens einer der 2D-Bildsequenzen (72).

13. Bildrekonstruktionsvorrichtung nach Anspruch 12, wobei die Anzeigeeinheit (18, 18') konfiguriert ist, um gleichzeitig die 3D-Bildsequenz (56) und drei 2D-Bildsequenzen (72) anzuzeigen, die zu den drei senkrecht angeordneten 2D-Ansichtsebenen (74) gehören.

14. Verfahren zur Rekonstruktion medizinischer Bilder, umfassend die Schritte von:
- Empfangen einer 3D-Bildsequenz (56) von medizinischen 3D-Bildern über die Zeit, die aus einem Scan eines Körperteils eines Subjekts (12) resultiert;
- Auswahlen eines lokalen interessierenden Punktes (76) Innerhalb mindestens eines der medizinischen 3D-Bilder der 3D-Bildsequenz (56);
- Erzeugen von drei 2D-Ansichtsebenen (74) des mindestens einen der medizinischen 3D-Bilder, wobei die drei 2D-Ansichtsebenen (74) senkrecht zueinander angeordnet sind, und sich in dem ausgewählten interessierenden Punkt (76) schneiden;
- Bestimmen einer Trajektorie des interessierenden Punktes (76) innerhalb der 3D-Bildsequenz (56) über die Zeit: und
Erzeugen aus der 3D-Bildsequenz (56) von 2D-Bildsequenzen (72) in den 2D-Ansichtsebenen (74) durch automatisches Anpassen des Schnittpunkts der 2D-Ansichtsebenen (74) über die Zeit entlang der Trajektorie des interessierenden Punkts (76).

15. Computerprogramm mit Programmcode-Mitteln zum Bewirken, dass ein Computer die Schritte des Verfahrens nach Anspruch 14 ausführt, wenn das Computerprogramm auf einem Computer ausgeführt wird.

## Revendications

1. Appareil de reconstruction d'images (10) comprenant:
- une unité de réception (60) pour recevoir une séquence d'images 3D (56) d'images médicales 3D au cours du temps résultant d'un balayage d'une partie du corps d'un sujet (12);
- une unité de sélection (64) pour sélectionner un point d'intérêt local (76) au sein d'au moins l'une des images médicales 3D de la séquence d'images 3D (56) ;
- un générateur de tranches (66) pour générer trois plans de vue 2D (74) de l'au moins l'une des images médicales 3D, où lesdits trois plans de vue 2D (74) sont agencés perpendiculairement les uns aux autres et se croisent au point d'intérêt sélectionné (76); et
- une unité de suivi (68) pour déterminer une trajectoire du point d'intérêt (76) au sein de la séquence d'images 3D (56) au cours du temps;
où le générateur de tranches (66) est configuré pour générer à partir de la séquence d'images 3D (56) des séquences d'images 2D (72) dans les plans de vue 2D (74) en adaptant automatiquement l'intersection des plans de vue 2D (74) au cours du temps le long de la trajectoire du point d'intérêt (76).

2. Appareil de reconstruction d'images selon la revendication 1, dans lequel l'unité de sélection (64) comprend une interface d'entrée utilisateur pour sélectionner manuellement le point d'intérêt (76) au sein de l'au moins l'une des images médicales 3D de la séquence d'images 3D (56).

3. Appareil de reconstruction d'images selon la revendication 1, dans lequel l'unité de sélection (62) est configurée pour sélectionner automatiquement le point d'intérêt (76) au sein de l'au moins l'une des images médicales 3D de la séquence d'images 3D (56) en identifiant un ou plusieurs points de repère dans au moins l'une des images médicales 3D.

4. Appareil de reconstruction d'images selon la revendication 1, comprenant en outre une unité de stockage (62) pour stocker la séquence d'images 3D reçue (56).

5. Appareil de reconstruction d'images selon la revendication 1, comprenant en outre une unité d'acquisition d'images pour balayer la partie du corps du sujet (12) et acquérir la séquence d'images 3D (56).

6. Appareil de reconstruction d'images selon la revendication 1, dans lequel la séquence d'images 3D (56) est une séquence d'images ultrasonores 3D.

7. Appareil de reconstruction d'images selon les revendications 5 et 6, dans lequel l'unité d'acquisition d'images comprend:
- un transducteur à ultrasons (14) pour transmettre et recevoir des ondes ultrasonores vers et depuis la partie du corps du sujet (12); et
- une unité de reconstruction d'images ultrasonores (16) pour reconstruire la séquence d'images ultrasonores 3D (56) à partir des ondes ultrasonores reçues de la partie du corps du sujet (12).

8. Appareil de reconstruction d'images selon la revendication 1, dans lequel l'unité de suivi (68) est configurée pour déterminer la trajectoire du point d'intérêt (76) par:
- identification d'un ou plusieurs points distinctifs ou caractéristiques d'image dans un environnement local du point d'intérêt (76) dans l'au moins l'une des images médicales 3D de la séquence d'images 3D (56);
- suivi d'une ou plusieurs des trajectoires de référence de l'un ou plusieurs points distinctifs ou caractéristiques d'image dans la séquence d'images 3D (56) dans le cours du temps; et
- détermination de la trajectoire du point d'intérêt (76) sur la base de l'une ou plusieurs des trajectoires de référence.

9. Appareil de reconstruction d'images selon la revendication 8, dans lequel l'unité de suivi (68) est configurée pour identifier l'un ou plusieurs points distinctifs ou caractéristiques d'image en identifiant des régions d'image au sein de l'au moins l'une des images médicales 3D ayant des gradients de moucheture d'image locaux au-dessus d'une valeur de seuil prédéfinie.

10. Appareil de reconstruction d'images selon la revendication 8, dans lequel l'unité de suivi (68) est configurée pour suivre l'une ou plusieurs des trajectoires de référence en minimisant un terme énergétique d'un champ de déplacement dense qui comprend un déplacement de l'un ou plusieurs des points distinctifs ou des caractéristiques d'image.

11. Appareil de reconstruction d'images selon la revendication 8, dans lequel l'unité de suivi (68) est configurée pour déterminer la trajectoire du point d'intérêt (76) sur la base de l'une ou plusieurs des trajectoires de référence par une interpolation locale entre l'une ou plusieurs des trajectoires de référence.

12. Appareil de reconstruction d'images selon la revendication 1, comprenant en outre une unité d'affichage (18, 18') pour afficher au moins l'une des séquences d'images 2D (72).

13. Appareil de reconstruction d'images selon la revendication 12, dans lequel l'unité d'affichage (18, 18') est configurée pour afficher simultanément la séquence d'images 3D (56) et trois séquences d'images 2D (72) appartenant aux trois plans de vue 2D agencés perpendiculairement (74).

14. Procédé de reconstruction d'images médicales, comprenant les étapes de:
- recevoir une séquence d'images 3D (56) d'images médicales 3D au cours du temps résultant d'un balayage d'une partie du corps d'un sujet (12);
- sélectionner un point d'intérêt local (76) au sein d'au moins l'une des images médicales 3D de la séquence d'images 3D (56);
- générer trois plans de vue 2D (74) de l'au moins l'une des images médicales 3D, où lesdits trois plans de vue 2D (74) sont agencés perpendiculairement les uns aux autres et se croisent au point d'intérêt sélectionné (76);
- déterminer une trajectoire du point d'intérêt (76) au sein de la séquence d'images 3D (56) dans le cours du temps; et
générer à partir de la séquence d'images 3D (56) des séquences d'images 2D (72) dans les plans de vue 2D (74) en adaptant automatiquement l'intersection des plans de vue 2D (74) dans le cours du temps le long de la trajectoire du point d'intérêt (76).

15. Programme informatique comprenant des moyens de code de programme pour amener un ordinateur à mettre en œuvre les étapes du procédé selon la revendication 14 lorsque ledit programme informatique est exécuté sur un ordinateur.
